**Europäisches Patentamt**

(19) **European Patent Office**

**Office européen des brevets**

(11) Publication number : **0 386 911 B1**

# (12) EUROPEAN PATENT SPECIFICATION

(45) Date of publication of patent specification :
27.10.93 Bulletin 93/43

(51) Int. Cl.$^5$ : **C09J 103/02**

(21) Application number : **90301983.4**

(22) Date of filing : **23.02.90**

(54) **Process for the preparation of starch glues.**

(30) Priority : **03.03.89 GB 8904935**

(43) Date of publication of application :
**12.09.90 Bulletin 90/37**

(45) Publication of the grant of the patent :
**27.10.93 Bulletin 93/43**

(84) Designated Contracting States :
**AT BE CH DE DK ES FR GB IT LI NL SE**

(56) References cited :
**US-A- 3 524 750**
**US-A- 3 622 388**

(73) Proprietor : **CERESTAR HOLDING BV**
**Nijverheidsstraat 1 P.O. Box 9**
**NL-4550 AA Sas Van Gent (NL)**

(72) Inventor : **Anderton, John**
**31 Thornycroft**
**Leigh, Lancashire WN7 2TH (GB)**
Inventor : **Boaden, Robert Jack**
**30 Richmond Park Road**
**East Sheen, London S14 8JT (GB)**
Inventor : **Froissart, Jean-Claude**
**34 La Gaillarderie**
**F-78590 Noisy Le Roi (FR)**
Inventor : **Johnson, Harry**
**103 Kingsleigh Road, Heaton Mersey**
**Stockport, Cheshire SK4 3PH (GB)**
Inventor : **Laubepain, Jean**
**32 rue de Tourmignies**
**F-59710 Attiches (FR)**

(74) Representative : **Wilkinson, Stephen John et al**
**Stevens, Hewlett & Perkins 1 St. Augustine's**
**Place**
**Bristol BS1 4UD (GB)**

EP 0 386 911 B1

# Description

The present invention relates to the preparation of starch glues particularly to starch glues for use in the production of corrugated paper or board.

The adhesive properties of gelatinised starch are well been known and an industrial process employing such properties in the production of corrugated board was described as long ago as 1937 in US patent 2 102 937. Corrugated board is made in a continuous process in which a strip of paper is first corrugated on heated rolls and a strip of liner paper then attached by means of an adhesive to the tips of the corrugations on one side. This is a "single facer" corrugated board while a "double backer" board has liner papers attached to both sides of the corrugated paper.

The essential property of an adhesive for corrugated paper board is that it should be able to form rapidly a bond between the paper surfaces under conditions in which, for double backer board in particular, only relatively low pressure may be applied and in which there is small and possibly poor contact between the surfaces to be bonded. It is desirable therefore that whereas the viscosity of the glue should be such as permit easy and efficient application to a continuously moving surface there should subsequently be a rapid increase in viscosity to permit bonding to take place.

The process of US patent 2 102 937, the so-called "Stein-Hall" process has been used since 1937, and is still widely used. The process employs as adhesive an aqueous mixture of gelatinised and ungelatinised starch. The gelatinised starch acts as the "carrier" and is an effective dispersing agent for the ungelatinised starch. The ungelatinised starch is caused to gelatinise in situ on the paper surface resulting in a rapid increase in viscosity and the formation of a satisfactory bond. The gelatinisation of the starch is promoted by an increased temperature and by providing an alkali such as sodium hydroxide in the glue.

A development in the technology of starch glues took place with the so-called "no-carrier" glues. The starch in this glue comprises ungelatinised but partially swollen starch suspended in water. The solids concentration in the glue is about 10% to 40% and the glue is prepared by heating an aqueous starch mixture at 21° to 74°C and at pH 8 to 34 until a Stein-Hall viscosity of about 20 to about 90 seconds is obtained when the swelling reaction is stopped by the addition of a reaction stopper such as alum or boric acid. A description of no-carrier starch adhesives is contained in US-A-3 355 307 and US-A-3 524 750.

No-carrier glues have a "shorter" ie less elastic texture than Stein-Hall starch glues which results in better glue pick-up by the flute tips of the corrugations and helps to keep the corrugator cleaner. In addition, compared with Stein-Hall adhesives, no-carrier glues show reversible shear thinning (pseudoplasticity) conferring improved pumpability and shear stability during stirring and whilst in storage. The absence of a carrier starch results in a stronger and faster migration of water to the starch granules which will gelatinise and burst on heating to give a viscous and tacky paste by means of which bonding of the papers takes place. Although giving good performance on the corrugator however no-carrier glues require more care during preparation than Stein-Hall glues, viscosity having to be monitored continuously.

In a later development a part of the total starch content of the glue is swollen as in the no-carrier glue and the remainder of the starch is added in its unswollen, ungelatinised form. In more detail, an alkaline slurry of starch is heated, for example to 35°C, until the desired viscosity is obtained. The reaction is then terminated by the addition of the remainder of the starch. The glue produced by this process has consistent flow and viscosity characteristics and is more economical in raw material costs, avoiding the addition of special reaction stoppers such as alum which are necessary in the no-carrier process.

In the no-carrier process and the modified no-carrier process described in the preceding paragraph stirring of the glue is continued after the swelling reaction has been stopped whereby a change in the viscosity of the glue takes place leading to the "final" viscosity of the glue ie the viscosity at which it is used in practice.

It is essential for the user of a starch glue to produce glues with a consistent final viscosity and it is desirable for the glue to have a consistent starch content. Starch is however a natural and not a synthetic product and it exhibits a variability in its swelling in the presence of sodium hydroxide and in its subsequent final viscosity, depending upon its origin, its age and its treatment during production. It is possible by prior selection of the starch to be used in glue production to reduce to some extent the variation in sensitivity of the starch but it is not possible completely to eliminate the variability and its consequent effect upon the final viscosity of the glue. Adjustment of the final viscosity eg. by addition of water inevitably has the undesirable effect of changing the starch content of the glue.

We have given considerable attention to the problem of producing starch glues in a standard manufacturing process in which it is desired to obtain consistent starch contents and consistent final viscosities despite variations in the swelling properties of the starch used. We have found that under standard conditions the final viscosity of the glue is dependant upon the time taken to reach the critical swelling viscosity ie that viscosity at which the swelling reaction is terminated. We have further found that to obtain a relatively constant final viscosity the critical swelling viscosity should be reduced as the reaction time increases. We have applied these facts in devising a method of controlling a no-carrier or modified no-carrier glue manufacturing process so as to obtain products having consistent final viscosities and constant starch contents.

According to the invention therefore a method of controlling a process for the production of a starch glue which process comprises partially swelling in an aqueous alkali dispersion part or all of the total starch content of the glue and terminating the swelling process at a preset critical swelling viscosity value is characterised by reducing the critical swelling viscosity value during the process as the elapsed reaction time increases.

The invention also comprises an apparatus for the production of a starch glue which comprises,

a) a vessel or treating an aqueous alkaline starch suspension so as to partially swell the starch granules,

b) means for continuously or semi-continuously measuring the viscosity of the suspension,

c) means for terminating the swelling reaction on reaching a preset critical swelling viscosity, which is characterised by

d) means for comparing the measured values of the viscosity of the suspension with a preset range of critical swelling viscosity values which decrease as the elapsed reaction time increases, which comparing means initiates the termination means when the measured viscosity coincides with the preset critical swelling viscosity for that period of the elapsed reaction time.

The present invention may be applied to the no-carrier process in which all of the starch in the glue is partially swollen and the swelling reaction terminated by the addition, for example, of alum or boric acid, or it may be applied to the modified no-carrier process in which only part of the starch is partially swollen and the swelling reaction is terminated by the addition of unswollen starch either as an aqueous slurry or in solid form. The invention is particularly applicable to the latter type of process.

A typical modified no-carrier process comprises suspending 300 Kg maize starch in 2100 liters of water at 35°C and after stirring for ten minutes adding 16 Kg sodium hydroxide dissolved in 50 to 100 liters water. The resulting mixture is stirred and its viscosity measured continuously. When the viscosity reaches a value of 20 to 60 Stein-Hall seconds the swelling reaction is terminated by the addition of a further 300 Kg of Granular maize starch followed by 9 Kg borax. Stirring is then continued for 5 to 15 minutes until a desired final viscosity of 35 Stein-Hall seconds is achieved. If the nature of the starch is such that after 10 to 15 minutes no increase in viscosity has occurred a further addition of sodium hydroxide is made and subsequently further additions at 5 minute intervals until the critical swelling viscosity is reached. If the final viscosity is greater than desired water may be added to reduce it.

The present invention may be applied to the process described in the preceding paragraph by first carrying out a series of trials with the manufacturing equipment concerned to establish the rate at which the critical swelling viscosity decreases with elapsed reaction time for a given desired final viscosity value, the elapsed reaction time starting from the first addition of sodium hydroxide irrespective of the subsequent time taken for swelling to start. A computer may be installed in the process and is provided with the time dependant critical viscosity values. The measured viscosity values are fed to the computer where they are compared with the critical viscosity values. When a measured value coincides with the critical value at that point in elapsed reaction time the addition of the starch is initiated to terminate the reaction.

An example of the time dependancy of the critical swelling viscosity required to achieve a given constant final viscosity is shown by the following figures which were obtained in a glue manufacturing process in which the desired final viscosity was 60 Stein-Hall seconds. Under otherwise constant processing conditions the critical swelling viscosities required to achieve this desired final viscosity were found to be

40 Stein-Hall seconds in the period 0 to 10 minutes

35 Stein-Hall seconds in the period 11 to 15 minutes

33 Stein-Hall seconds in the period 16 to 20 minutes

32 Stein-Hall seconds in the period 21 to 25 minutes

31 Stein-Hall seconds in the period 26 to 30 minutes

30 Stein-Hall seconds in the period 31 to 35 minutes

29 Stein-Hall seconds in the period 36 to 40 minutes.

For most no-carrier or modified no-carrier processes using a range of starches to obtain a glue with a final viscosity of 35 to 80 Stein-Hall seconds the critical swelling viscosity may be 30 to 50 Stein-Hall seconds after 10 minutes elapsed reaction time to 25 to 40 Stein-Hall seconds after 20 minutes elapsed reaction time and 20 to 30 Stein-Hall seconds after more than 30 minutes elapsed reaction time. Figure I attached to this specification shows an idealised relationship between critical swelling viscosity and elapsed reaction time represented by curve A. Curves B, C and D represent the change in viscosity with time for three batches of glue production and the reactions would be terminated at the times at which curves B, C and D respectively intersect with curve A.

In the practical application of the invention it is possible to use the critical swelling viscosity/elapsed re-

EP 0 386 911 B1

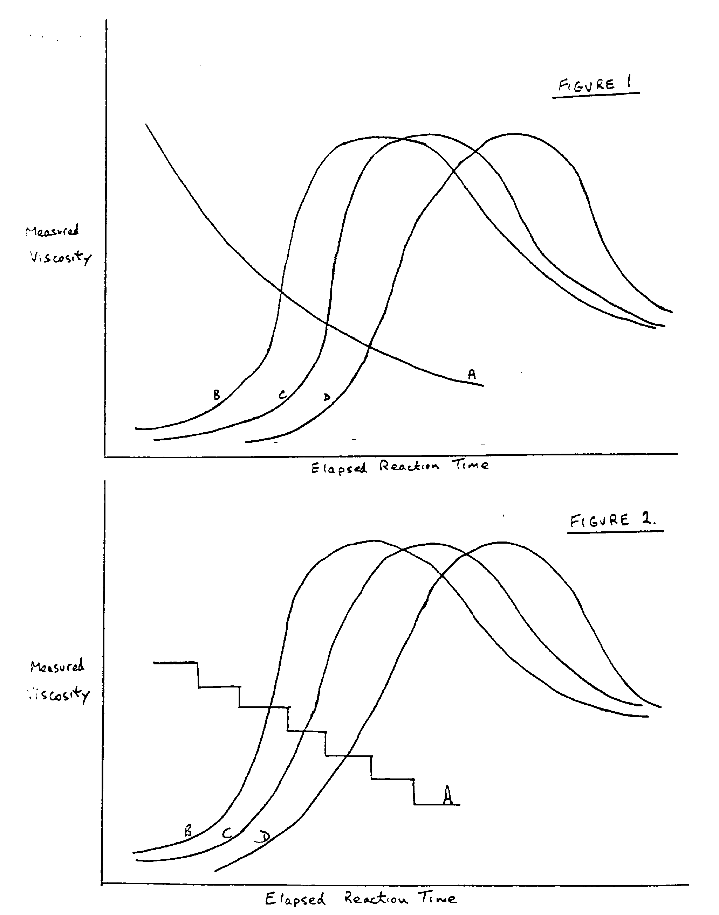

action time relationship shown in Figure 1 or to insert a series of discrete values of the critical swelling viscosities in the computer. In this latter case the graphical representation is shown in Figure II where a step-wise diminution of critical swelling viscosity with elapsed reaction time takes place.

The method of the present invention may be refined by utilising a feedback from the results of previous batches to adjust the position of curve A for the next batch. For instance, if a desired final viscosity of the glue of 60 Stein-Hall seconds is desired and a value of 65 is achieved in practice, curve A in Figures I and II should be moved in the direction of the "Viscosity" axis. The converse should be applied if the achieved final viscosity is less than 60 Stein-Hall seconds. Figure III shows a series of configurations to achieve different final viscosity values.

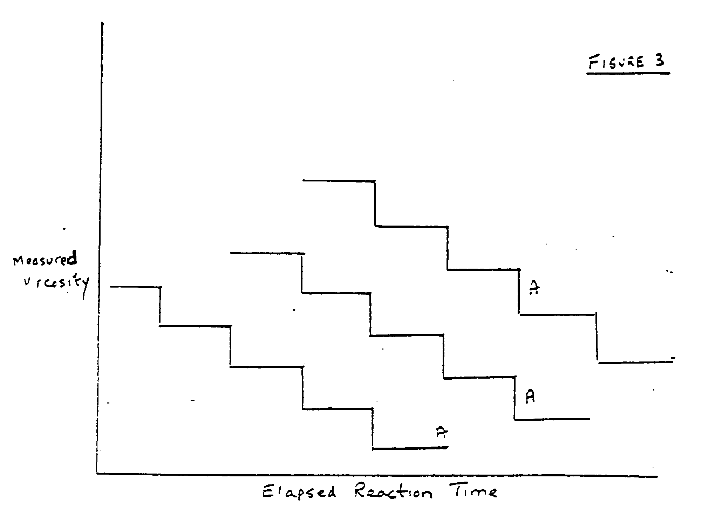

The results from the previous batch may also be used to adjust the amount of sodium hydroxide to be used in a given batch (see Example 2). For example, if the elapsed reaction times required to achieve the critical swelling viscosities in Figures I and II are regarded as too long for economic plant operation the amount of sodium hydroxide added to the process may be increased which will have the effect for example of changing from curve of D in Figure 2 to curve C or curve B.

The general operating conditions of the glue manufacturing processes to which the present invention is applicable are those well known in the art. Thus, the glues which are produced may contain 10 to 40% by weight starch (dry substance) preferably 18 to 30% more preferably 20 to 25%, may have a final viscosity in the range 30 to 80 Stein-Hall seconds and a pH of 10 to 14. The glue may contain 20 to 100% by weight partially swollen starch, the balance of the starch being unswollen.

The present invention has the advantages described above of enabling the glue manufacturer to produce glues with a consistent starch content, with a consistent final viscosity and at a constant reaction time in his no-carrier or modified no-carrier process.

The invention will now be further illustrated by reference to the following Examples.

Example 1

A series of trials established the following relationship between critical swelling viscosity and elapsed reaction tine for a desired final viscosity of 50 Stein-Hall seconds.

| Elapsed Reaction Time mins. | Critical Swelling Viscosity Stein-Hall seconds |
|---|---|
| 10 | 35 |
| 15 | 34 |
| 20 | 33 |
| 25 | 31.5 |
| 30 | 30.5 |
| 35 | 29 |

In the preparation of a starch glue on an industrial unit 225 Kg maize starch were slurried with 2120 Kg water at 35°C. 16.8 Kg sodium hydroxide (40% weight/volume aqueous solution) was then added and the slurry agitated. After 10 minutes the viscosity was found to be below the critical swelling viscosity for 10 minutes elapsed reaction time. After a further 10 minutes 0.8 Kg sodium hydroxide was added (again as a 40% weight/volume aqueous solution) and agitation continued. After 22 minutes elapsed reaction time the viscosity reached 33 Stein-Hall seconds ie the critical swelling viscosity for that period of elapsed reaction time. Swelling was terminated by the addition of 315 Kg starch and 7 Kg borax. After a further 10 minutes agitation and the addition of 0.38 litre preservative (formaldehyde) the final viscosity was found to be 50 Stein-Hall seconds.

Example 2

(a) A slurry of 2200 Kg water and 350 Kg maize starch was heated to the desired temperature of 35°C with 100 Kg steam in an industrial unit (different from that of Example 1). 32.4 litres sodium hydroxide (40%

4

weight/volume aqueous solution) was then added and the slurry agitated.

After 14 minutes the critical swelling viscosity had not been reached so a further 1.8 litres sodium hydroxide was added and agitation continued for a further 4 minutes. The critical swelling viscosity still not having been attained another 1.8 litres sodium hydroxide was added and, after a further three minutes agitation, the critical swelling viscosity (31 Stein-Hall seconds) for this period of elapsed reaction time was reached and the reaction was terminated by the addition of 350 Kg starch and 10 Kg borax. Agitation for a further 20 minutes resulted in a final viscosity of 51 Stein-Hall seconds.

(b) When a different starch was used but conditions otherwise remaining the same as in (a) above it was found that instead of three additions of sodium hydroxide of 32.4 litres 1.8 litres and 1.8 litres at elapsed reaction time intervals of 0 minutes, 14 minutes and 18 minutes respectively it was necessary to make six additions. The new requirement was an initial 32.4 litres and five subsequent additions of 1.8 litres at 14 minutes and at four minutes intervals thereafter. The critical swelling viscosity which was finally reached after 31.5 minutes elapsed reaction time was 29 Stein-Hall seconds and the final viscosity was 52 Stein-Hall seconds.

(c) In order to reduce the reaction time in the next run with the starch used in (b) the sodium hydroxide addition was increased so that 37.3 litres were added at time zero followed by 2.1 litres after 14 minutes and a further 2.1 litres after 18 minutes. The critical swelling viscosity of 31 Stein-Hall seconds occurred after 19 minutes of elapsed reaction time and the final viscosity of the glue was 51 Stein-Hall seconds.

This example illustrates the practice described earlier in the specification of varying the sodium hydroxide addition based on the previous batch experience and thereby obtaining an acceptably consistent reaction time.

## Claims

1. A method of controlling a process for the production of a starch glue which process comprises partially swelling in an aqueous alkali dispersion part or all of the total starch content of the glue and terminating the swelling process at a critical swelling viscosity value, characterised by reducing the critical swelling viscosity value during the process as the elapsed reaction time increases.

2. A method according to claim 1 characterised in that the glue has a total starch content of 15 to 40 % by weight (dry substance) and a final viscosity of 35 to 80 Stein-Hall seconds.

3. A method according to claim 1 or claim 2 characterised in that 20 to 100 % of the total starch content of the glue is partially swollen.

4. A method according to any one of the preceding claims characterised in that the swelling process is terminated by the addition of ungelatinised starch, alum or boric acid.

5. A method according to any one of the preceding claims characterised in that the critical swelling viscosity reduces from a value in the range 30 to 50 Stein-Hall seconds for an elapsed reaction time of 10 minutes to a value in the range 25 to 40 Stein-Hall seconds for an elapsed reaction time of 20 minutes and to 20 to 30 Stein-Hall seconds for an elapsed reaction time of more than 30 minutes for glues with desired final viscosities in the range 35 to 80 Stein-Hall seconds.

6. A method according to any one of the preceding claims characterised in that the critical swelling viscosity values are raised or lowered in proportion to the final viscosity of the glue produced in the preceding batch.

7. A method according to any one of the preceding claims characterised in that the rate at which the critical swelling viscosities are achieved is increased or decreased, depending upon the total reaction time of the preceding batch, by increasing or reducing the amount of sodium hydroxide added to the glue manufacturing process.

8. An apparatus for the production of a starch glue which comprises.
   a) a vessel for treating an aqueous, alkaline starch suspension so as to partially swell the starch granules,
   b) means for continuously or semi-continuously measuring the viscosity of the suspension,
   c) means for terminating the swelling reaction on reaching a preset critical swelling viscosity, which is characterised by,
   d) means for comparing the measured values of the viscosity of the suspension with a preset range of critical swelling viscosity values which decrease as the elapsed reaction time increases, which comparing means initiates the termination means when the measured viscosity coincides with the preset critical swelling viscosity for that period of the elapsed reaction time.

9. An apparatus according to claim 8 characterised in that the comparing means is a computer.


**Patentansprüche**

1. Ein Verfahren zur Steuerung des Herstellungsverfahrens für die Herstellung eines Stärkeklebstoffes, wobei das Herstellungsverfahren das teilweise Quellen in einer wässrigen alkalischen Dispersion von einem Teil oder der gesamten Menge des Stärkegehaltes des Klebstoffes und Beenden des Quellverfahrens bei einem kritischen Quellviskositätswert umfaßt, dadurch gekennzeichnet, daß man den kritischen Quellviskositätswert während des Verfahrens reduziert, während die verstrichene Reaktionszeit ansteigt.

2. Ein Verfahren nach Anspruch 1, dadurch gekennzeichnet, daß der Klebstoff einen Gesamtstärkegehalt von 15 bis 40 Gew% (Trockensubstanz) und eine Endviskosität von 35 bis 80 Stein-Hall-Sekunden besitzt.

3. Ein Verfahren nach Anspruch 1 oder 2, dadurch gekennzeichnet, daß 20 bis 100% des gesamten Stärkegehaltes des Klebstoffes teilweise gequollen ist.

4. Ein Verfahren nach einem der vorhergehenden Ansprüche, dadurch gekennzeichnet, daß das Quellverfahren durch die Zugabe ungelatinisierter Stärke, Alaun oder Borsäure beendet wird.

5. Ein Verfahren nach einem der vorhergehenden Ansprüche, dadurch gekennzeichnet, daß die kritische Quellviskosität von einem Wert im Bereich von 30 bis 50 Stein-Hall-Sekunden für eine verstrichene Reaktionszeit von 10 Minuten auf einen Wert im Bereich von 25 bis 40 Stein-Hall-Sekunden für eine verstrichene Reaktionszeit von 20 Minuten und zu 20 bis 30 Stein-Hall-Sekunden für eine verstrichene Reaktionszeit von mehr als 30 Minuten für Klebstoffe mit der gewünschten Endviskosität im Bereich von 35 bis 80 Stein-Hall-Sekunden abnimmt.

6. Ein Verfahren nach einem der vorhergehenden Ansprüche, dadurch gekennzeichnet, daß die kritischen Quellviskositätswerte im Verhältnis zu der Endviskosität des im vorhergehenden Laufes hergestellten Klebstoffes erhöht oder erniedrigt werden.

7. Ein Verfahren nach einem der vorhergehenden Ansprüche, dadurch gekennzeichnet, daß die Geschwindigkeit, bei der die kritischen Quellviskositäten erreicht werden, in Abhängigkeit von der Gesamtreaktionszeit des vorhergehenden Laufes dadurch gesteigert wird oder vermindert wird, daß man die Menge an dem Klebstoffherstellungsverfahren zugesetzten Natriumhydroxid verringert oder steigert.

8. Ein Gerät für die Herstellung eines Stärkeklebstoffes, daß umfaßt,
   a) ein Gefäß zur Behandlung einer wässrigen Alkali-Stärke-Suspension, um die Stärkegranula teilweise zu quellen,
   b) Mittel für die kontinuierliche oder halbkontinuierliche Messung der Viskosität der Suspension,
   c) Mittel zum Beenden der Quellreaktion beim Erreichen einer vorherbestimmten kritischen Quellviskosität, die gekennzeichnet sind durch
   d) Mittel zum Vergleich der gemessenen Werte der Viskosität der Suspension mit einem vorher bestimmten Bereich kritischer Quellviskositätswerte, die abnehmen, während die verstrichene Zeit zunimmt, wobei die Vergleichsmittel die Terminierungsmittel initiieren, wenn die gemessene Viskosität mit der vorher festgesetzten kritischen Quellviskosität für den Zeitraum der verstrichenen Reaktionszeit übereinstimmt.

9. Ein Gerät nach Anspruch 8, dadurch gekennzeichnet, das die Vergleichsmittel ein Computer sind.


**Revendications**

1. Méthode de maîtrise d'un procédé pour la production d'une colle à base d'amidon, ce procédé comprenant le gonflement partiel, dans une dispersion alcaline aqueuse, d'une partie ou de la totalité de l'amidon total contenu dans la colle et l'arrêt du processus de gonflement à une valeur critique de la viscosité obtenue par le gonflement, procédé caractérisé en ce qu'on diminue la valeur de la viscosité critique de gonflement pendant le procédé, à mesure qu'augmente le temps de réaction qui s'est écoulé.

2. Méthode selon la revendication 1, caractérisée en ce que la colle a une teneur totale en amidon de 15 à 40 % en poids (en substance sèche) et a une viscosité finale correspondant à 35 à 80 s Stein-Hall.

3. Méthode selon la revendication 1 ou la revendication 2, caractérisée en ce que 20 à 100 % de la teneur totale en amidon de la colle sont partiellement gonflés.

4. Méthode selon l'une quelconque des revendications précédentes, caractérisée en ce que l'on arrête le processus de gonflement en ajoutant de l'amidon non gélatinisé, de l'alun ou de l'acide borique.

5. Méthode selon l'une quelconque des revendications précédentes, caractérisée en ce que la viscosité critique de gonflement diminue pour passer d'une valeur comprise entre 30 et 50 s Stein-Hall pour un temps de réaction écoulé de 10 min à une valeur comprise entre 25 et 40 s Stein-Hall pour un temps de réaction écoulé de 20 min et passe à 20 à 30 s Stein-Hall pour un temps de réaction écoulé de plus de 30 min pour des colles présentant des viscosités finales voulues comprises entre 35 et 80 s Stein-Hall.

6. Méthode selon l'une quelconque des revendications précédentes, caractérisée en ce qu'on élève ou abaisse les valeurs critiques de la viscosité de gonflement, selon la viscosité finale de la colle produite dans le lot précédent.

7. Méthode selon l'une quelconque des revendications précédentes, caractérisée en ce que la vitesse à laquelle les viscosités critiques de gonflement sont atteintes est augmentée ou diminuée selon le temps total de réaction pour le lot précédent, par augmentation ou diminution de la quantité d'hydroxyde de sodium que l'on introduit dans le procédé de fabrication de la colle.

8. Appareil pour la production d'une colle à base d'amidon, qui comprend
   (a) un récipient pour traiter une suspension alcaline aqueuse d'amidon de façon à faire partiellement gonfler les granules d'amidon,
   (b) un moyen pour mesurer, de façon continue ou semi-continue, la viscosité de la suspension,
   (c) un moyen pour arrêter la réaction de gonflement lorsqu'est atteinte une viscosité critique préétablie de gonflement, appareil qui se caractérise par
   (d) un moyen pour comparer les valeurs mesurées de la viscosité de la suspension avec une gamme préétablie des valeurs critiques de la viscosité de gonflement, valeurs qui diminuent à mesure qu'augmente le temps qui s'est écoulé pour la réaction, ce moyen de comparaison faisant fonctionner le moyen de terminaison quand la viscosité mesurée coïncide avec la viscosité critique préétablie de gonflement pour cette période de temps écoulé pour la réaction.

9. Appareil selon la revendication 8, caractérisé en ce que le moyen de comparaison est un ordinateur.

FIGURE 1

Measured Viscosity

Elapsed Reaction Time

FIGURE 2.

Measured Viscosity

Elapsed Reaction Time

FIGURE 3

Measured
Viscosity

Elapsed Reaction Time